# EUROPEAN PATENT APPLICATION

(11) **EP 3 078 532 A1**
(43) Date of publication of application: **12.10.2016**
(21) Application number: 16162959.7
(22) Date of filing: 30.03.2016
(51) Int. Cl.: B60K 15/07

(54) **APPARATUS FOR SUPPORTING A FUEL TANK**

(30) Priority: 06.04.2015 KR 20150048480
(71) Applicant: ILJIN Composites Co., Ltd., Jeollabuk-do 55322 (KR)
(72) Inventor: Heo, Seok Bong, 55135 Jeollabuk-do (BL); Choi, Bong Won, 55316 Jeollabuk-do (KR); Park, Jae Sung, 54131 Jeollabuk-do (KR)
(74) Representative: Zech, Stefan Markus

(57) **Abstract**

An apparatus for supporting a fuel tank, including:
a first frame (110A) which is supported to a vehicle body and supports a fuel tank (T);
a second frame (110B) which is spaced from the first frame (110A), is supported to the vehicle body, and supports the fuel tank; and a connecting rod (120) configured to connect the first frame (110A) and the second frame (110B), in which at least one of the first frame (110A) and the second frame (110B) is connected to the connecting rod (120) to be relatively movable with respect to the connecting rod (120). Accordingly, even though a vehicle body or a fuel tank is changed, it is possible to stably fix the fuel tank to the vehicle body without providing a new apparatus for supporting a fuel tank.

## Description

### CROSS-REFERENCE TO RELATED APPLICATIONS

This application claims priority to and the benefit of Korean Patent Application No. 10-2015-0048480 filed in the Korean Intellectual Property Office on April 6, 2015, the entire contents of which are incorporated herein by reference.

### TECHNICAL FIELD

The present invention relates to an apparatus for supporting a fuel tank, and more particularly, to an apparatus for supporting a fuel tank, which is capable of fixing a fuel tank of a vehicle to a vehicle body.

### BACKGROUND ART

In general, a fuel tank supporting apparatus is an apparatus for fixing a fuel tank which supplies fuel, such as Compressed Natural Gas (CNG), to a vehicle to a vehicle body.

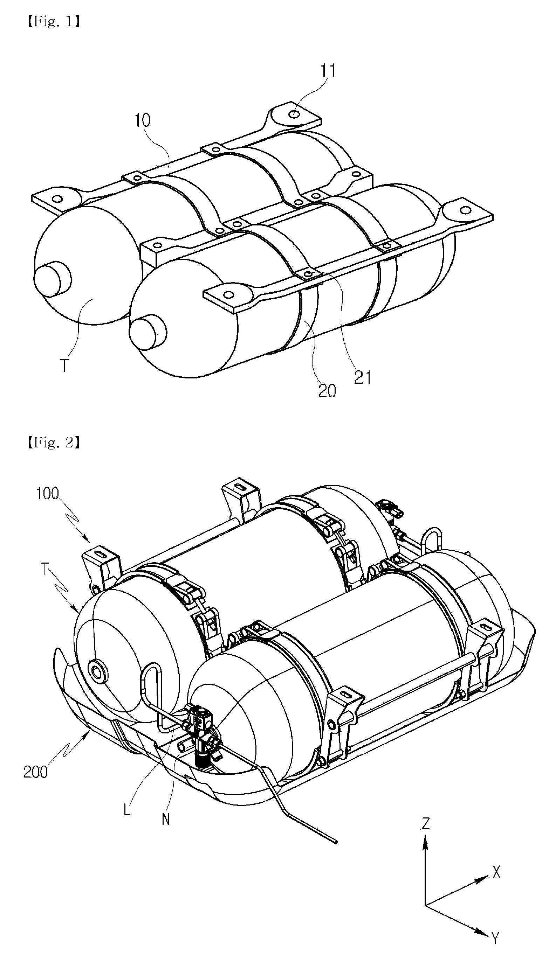

FIG. 1 is a perspective view illustrating a fuel tank supporting apparatus in the related art.

As illustrated in FIG. 1, the fuel tank T supporting apparatus in the related art includes a frame 10 fastened to a vehicle body, and a fixing member 20 fixing the fuel tank T to the frame 10.

The frame 10 is fastened to the vehicle body by frame-vehicle body fastening bolts (not illustrated), which pass mount holes 11 formed at both ends of the frame 10 and fastened to frame fastening recesses (not illustrated) of the vehicle body.

The fastening member 20 is fastened to the frame 10 by fixing member-frame fastening bolts (not illustrated) passing through through-holes 21 formed at both ends of the fixing member 20 and fastened to a center portion of the frame 10.

However, in the apparatus for supporting the fuel tank T in the related art, when a vehicle body is changed or a position of the frame fastening recess (not illustrated) of the vehicle body is changed by tolerance and the like, the frame 10 cannot be fastened to the vehicle body, so that a new apparatus for supporting the fuel tank T corresponding to the changed frame fastening recess (not illustrated) needs to be provided.

Further, a position of the fixing member 20 is fixed with respect to the frame 10, so that when a length of the fuel tank T is changed, it is impossible to stably support the fuel tank T. That is, when a length of the fuel tank T is smaller than a spaced distance between the two fixing members 20, the fuel tank T is supported to only any one of the two fixing members 20, so that the fuel tank T is not stably supported, and when a length of the fuel tank T is larger than a spaced distance between the two fixing members 20, the two fixing members 20 support only a center side of the fuel tank T, so that the fuel tank T is shaken based on a portion supported to the fixing member 20.

### SUMMARY OF THE INVENTION

The present invention has been made in an effort to provide an apparatus for supporting a fuel tank, which may be fastened to a vehicle body even though a position of a frame fastening recess of the vehicle body is changed.

The present invention has been made in an effort to provide an apparatus for supporting a fuel tank, which is capable of stably supporting a fuel tank even though a length of the fuel tank is changed.

An exemplary embodiment of the present invention provides an apparatus for supporting a fuel tank, including: a first frame which is supported to a vehicle body and supports a fuel tank; a second frame which is spaced from the first frame, is supported to the vehicle body, and supports the fuel tank; and a connecting rod configured to connect the first frame and the second frame, in which at least one of the first frame and the second frame is connected to the connecting rod to be relatively movable with respect to the connecting rod.

A first connection hole, through which the connecting rod passes, may be formed in the first frame, a second connection hole, through which the connecting rod passes, may be formed in the second frame, and a gap may be formed between the first connection hole and the connecting rod and between the second connection hole and the connecting rod.

Each of the connecting rod, the first connection hole, and the second connection hole may be formed in a cylindrical shape having a circular cross-section, and an inner diameter of the first connection hole and an inner diameter of the second connection hole may be formed to be the same as an outer diameter of the connecting rod.

Each of the connecting rod, the first connection hole, and the second connection hole may be formed in a cylindrical shape having a circular cross-section, and an inner diameter of the first connection hole and an inner diameter of the second connection hole may be formed to be larger than an outer diameter of the connecting rod.

The first frame may be supported to the vehicle body by a first bolt which passes through a mount hole of the first frame and is fastened to the vehicle body, the second frame may be supported to the vehicle body by a second bolt which passes through a mount hole of the second frame and is fastened to the vehicle body, an inner diameter of the mount hole of the first frame may be formed to be larger than an outer diameter of a screw of the first bolt and smaller than a diagonal distance of a screw head of the first bolt, and an inner diameter of the mount hole of the second frame may be formed to be larger than an outer diameter of a screw of the second bolt and smaller than a diagonal distance of a screw head of the second bolt.

The connecting rod may be formed to be longer than a gap between a portion of the first frame supported to the vehicle body and a portion of the second frame supported to the vehicle body.

The connecting rod may be provided with a separation preventing part protruding from an outer circumferential surface of the connecting rod.

The number of connecting rods provided may be two or more.

The fuel tank may be provided between the plurality of connecting rods.

The first frame may cross the fuel tank in a width direction vertical to a longitudinal direction of the fuel tank and support the fuel tank, and the second frame may be spaced apart from the first frame in the longitudinal direction of the fuel tank and cross the fuel tank in a width direction of the fuel tank, and support the fuel tank.

The fuel tank may be formed in a cylindrical shape, and the first frame and the second frame may cross the fuel tank in a radius direction of the fuel tank.

The number of fuel tanks provided may be two or more, the plurality of fuel tanks may be arranged in the width direction of the fuel tank, and each of the first frame and the second frame may cross all of the plurality of fuel tanks.

The first frame may be provided with a strap fixing the fuel tank to the first frame, and the second frame may be provided with a strap fixing the fuel tank to the second frame.

The apparatus may further include strap rubber provided between the first frame and the fuel tank, the second frame and the fuel tank, and the strap and the fuel tank.

According to the apparatus for supporting the fuel tank according to the present invention, at least one of the first frame and the second frame, which support the fuel tank and are connected with each other by the connecting rod, is connected to the connecting rod to be relatively movable with respect to the connecting rod, so that a gap between the first frame and the second frame is adjusted and an angle between the first frame and the second frame and the connecting rod is adjusted. Accordingly, even though a position of the frame fastening recess of the vehicle body is changed, the first frame and the second frame may be fastened to the vehicle body. Accordingly, it is possible to solve a problem in that it is necessary to provide a new apparatus for supporting the fuel tank corresponding to the changed frame fastening recess.

Further, a gap between the first frame and the second frame is adjusted in accordance with a length of the fuel tank, so that it is possible to stably support the fuel tank even though the length of the fuel tank is changed.

### BRIEF DESCRIPTION OF THE DRAWINGS

FIG. 1 is a perspective view illustrating a fuel tank supporting apparatus in the related art.
FIG. 2 is a perspective view illustrating an apparatus for supporting a fuel tank according to an exemplary embodiment of the present invention.
FIG. 3 is an exploded perspective view of FIG. 2.
FIG. 4 is a perspective view illustrating a frame and a connecting rod of FIG. 3.
FIG. 5 is a perspective view of FIG. 4 viewed at the other side.
FIG. 6 is a front view illustrating a state where the apparatus for supporting the fuel tank of FIG. 2 is fastened to a vehicle body.
FIG. 7 is a bottom view of FIG. 6.
FIG. 8 is a front view illustrating a state where the apparatus for supporting the fuel tank of FIG. 2 is fastened to another vehicle body.
FIG. 9 is a front view illustrating a state where the apparatus for supporting the fuel tank of FIG. 2 is fastened to another vehicle body.
FIG. 10 is a bottom view illustrating a state where the apparatus for supporting the fuel tank of FIG. 2 is fastened to another vehicle body.

### DETAILED DESCRIPTION

Hereinafter, an apparatus for supporting a fuel tank according to the present invention will be described in detail with reference to the accompanying drawings.

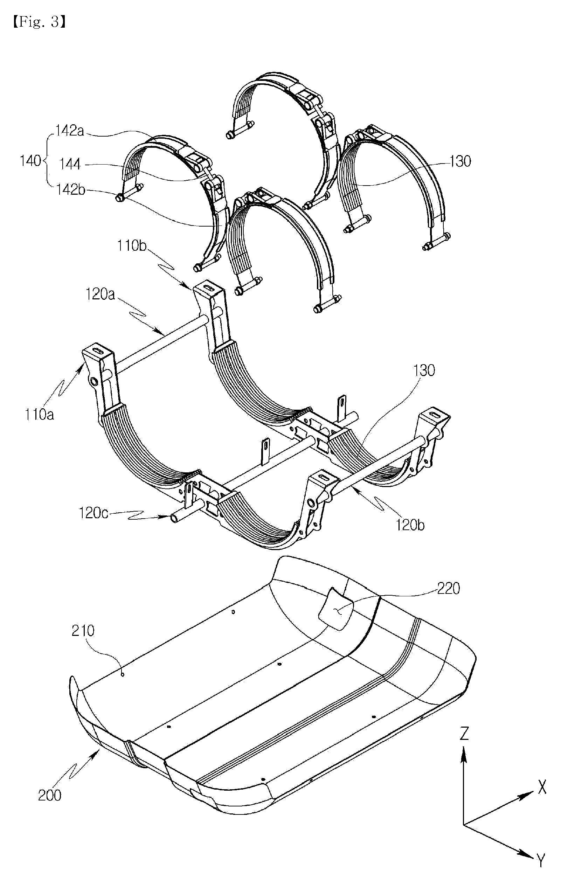

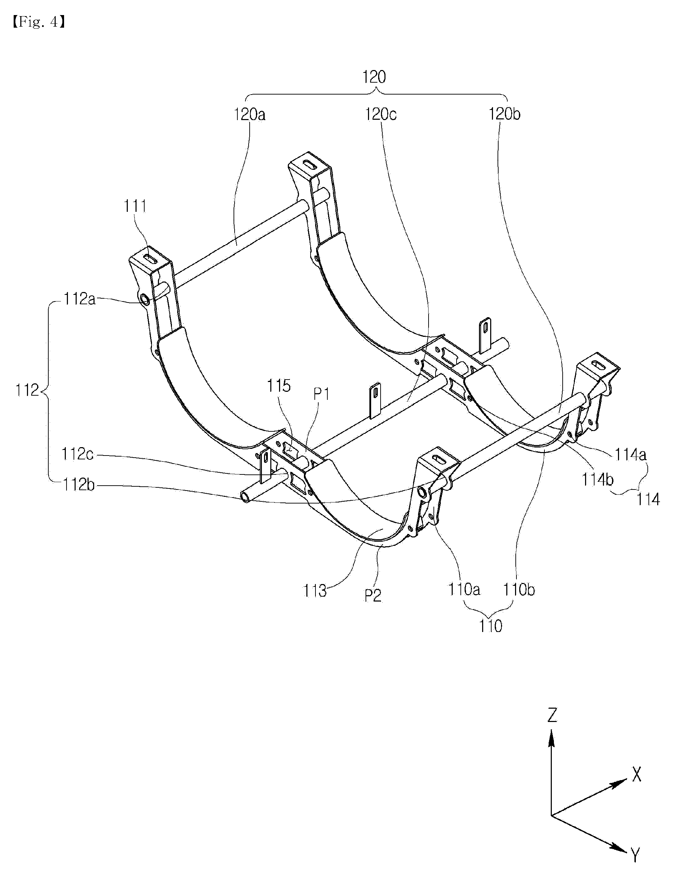

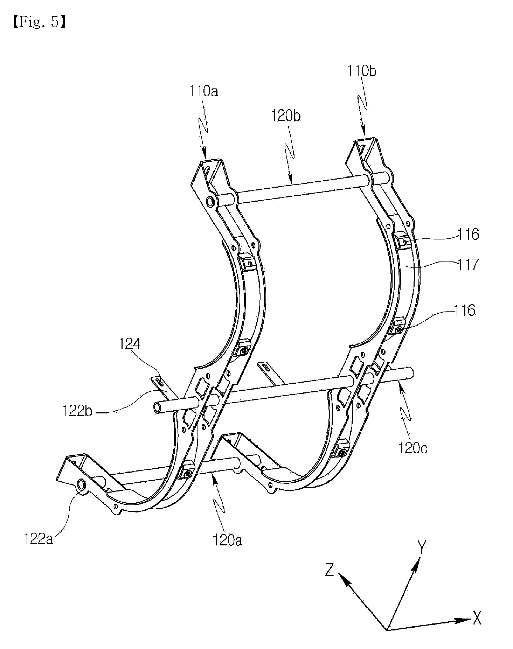

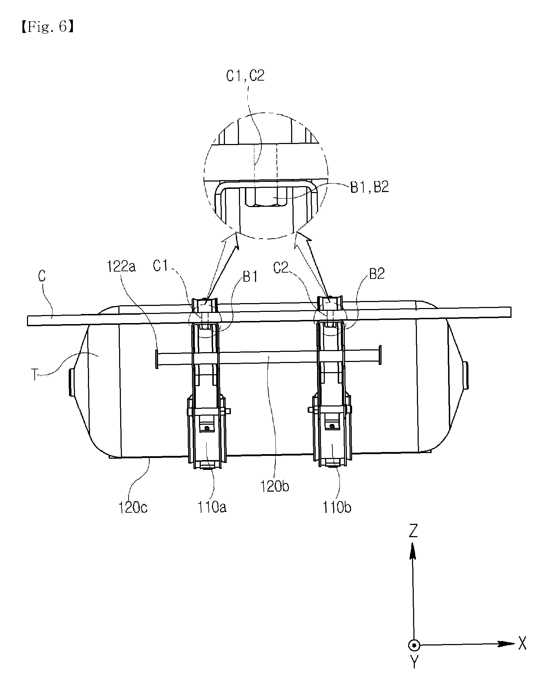

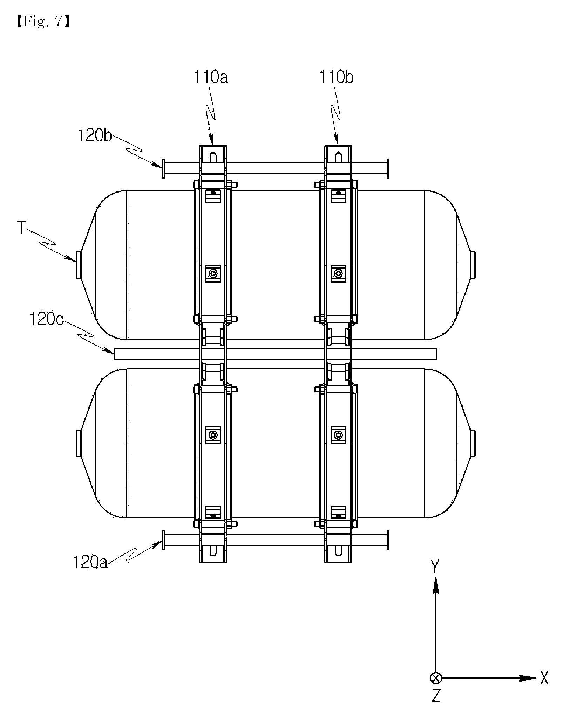

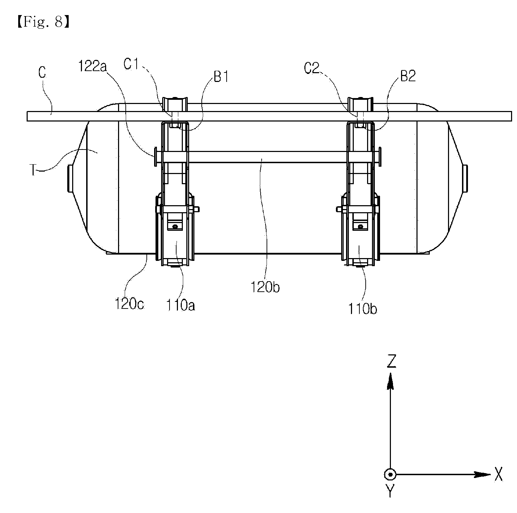

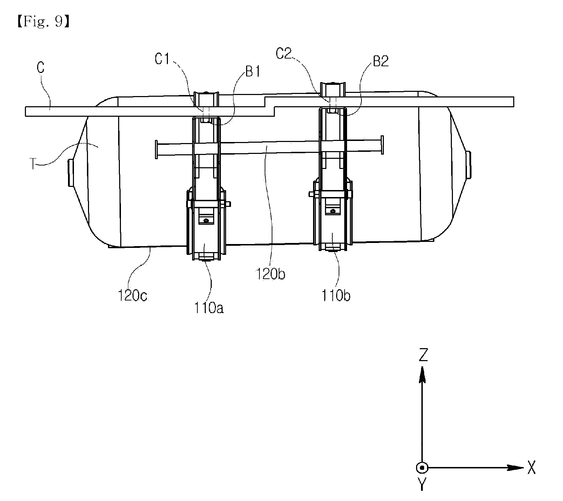

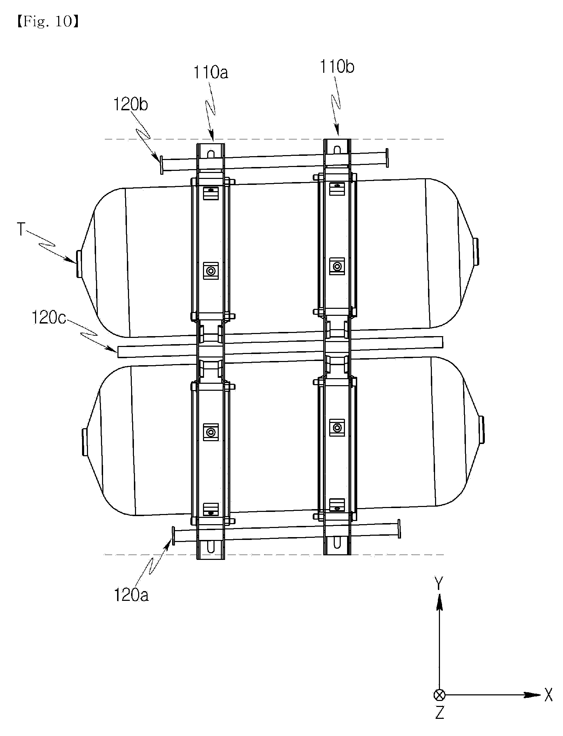

FIG. 2 is a perspective view illustrating an apparatus for supporting a fuel tank according to an exemplary embodiment of the present invention, FIG. 3 is an exploded perspective view of FIG. 2, in which the fuel tank is not illustrated, FIG. 4 is a perspective view illustrating a frame and a connecting rod of FIG. 3, FIG. 5 is a perspective view of FIG. 4 viewed at the other side, FIG. 6 is a front view illustrating a state where the apparatus for supporting the fuel tank of FIG. 2 is fastened to a vehicle body, and FIG. 7 is a bottom view of FIG. 6. FIG. 8 is a front view illustrating a state where the apparatus for supporting the fuel tank of FIG. 2 is fastened to another vehicle body, FIG. 9 is a front view illustrating a state where the apparatus for supporting the fuel tank of FIG. 2 is fastened to another vehicle body, and FIG. 10 is a bottom view illustrating a state where the apparatus for supporting the fuel tank of FIG. 2 is fastened to another vehicle body.

As illustrated in the drawings, an apparatus for supporting a fuel tank T according to an exemplary embodiment of the present invention may include a fixing part 100 fixing the fuel tank T to a vehicle body C, and a protecting part 200 covering the fuel tank T.

The fixing part 100 may include a frame 110 which is supported to the vehicle body C and supports the fuel tank T, and a strap 140 which fixes the fuel tank T to the frame 110.

The frame 110 may include a first frame 110a and a second frame 110b, which are spaced apart from each other and support the fuel tank T.

The first frame 110a may be provided so that each of both ends of the first frame 110a is fastened to the vehicle body C, and a center portion thereof crosses the fuel tank T in a width direction, which is vertical to a longitudinal direction of the fuel tank T, at an opposite side of the vehicle body C based on the fuel tank T and supports the fuel tank T. That is, when the fuel tank T is formed in a cylindrical shape, the first frame 110a may cross the fuel tank T in a predetermined radius direction of the fuel tank T. Here, the predetermined radius direction of the cylindrical fuel tank T is a width direction of the fuel tank T. Hereinafter, the longitudinal direction of the fuel tank T will be referred to as an X-axis direction, the width direction of the fuel tank T will be referred to as a Y-axis direction, and a height direction of the fuel tank T vertical to the longitudinal direction and the width direction of the fuel tank T will be referred to as a Z-axis direction.

A mount hole 111 for fixing the first frame 110a to the vehicle body C may be formed at each of both ends of the first frame 110a. Here, the first frame 110a may be supported to the vehicle body C by frame-vehicle body fastening bolts B1 which pass through the mount holes 111 and fastened to frame fastening recesses C1 and C2 of the vehicle body C.

An inner diameter of the mount hole 111 may be formed to be larger than an outer diameter of a screw of the frame-vehicle body fastening bolt B1 and may be smaller than a diagonal distance of a screw head of the frame-vehicle body fastening bolt B1 so that a position of the first frame 110a may be adjusted with respect to the vehicle body C.

Further, a connection hole 112, through which a connecting rod 120 to be described below passes, may be formed at each of both ends of the first frame 110a. That is, a first connection hole 112a, through which a first connecting rod 120a to be described below passes, may be formed at one end of the first frame 110a, and a second connection hole 112b, through which a second connecting rod 120b to be described below passes, may be formed at the other end of the first frame 110a.

The first connection hole 112a passes through in the X-axis direction so that the first frame 110a is relatively movable with respect to the first connecting rod 120a, and may be formed to have a predetermined gap with the first connecting rod 120a. That is, when each of the first connecting rod 120a and the first connection hole 112a is formed in a cylindrical shape having a circular cross-section, an inner diameter of the first connection hole 112a may be formed to be larger than an outer diameter of the first connecting rod 120a. Accordingly, the first frame 110a may move in the X-axis direction with respect to the first connecting rod 120a, may be tilted based on the Y-axis, and may be tiltably connected with the first connecting rod 120a based on the Z-axis. As a matter of course, the first frame 110a may be connected with the first connecting rod 120a so as to be movable in the Y-axis direction and the Z-axis direction with respect to the first connecting rod 120a within a range of the gap. Here, a noise and vibration preventing member (not illustrated), which prevents noise and vibrations generated due to a collision of the first connecting rod 120a with the first connection hole 112a, may be provided on an inner circumferential surface 113 of the first connection hole 112a. The noise and vibration preventing member (not illustrated) may be formed of an elastically transformable rubber material so that the first connecting rod 120a may be tilted in a state of being inserted into the first connecting hole 112a.

The second connection hole 112b may be formed by the same principle as that of the first connection hole 112a so that the first frame 110a is relatively movable with respect to the second connecting rod 120b.

An inner circumferential surface 113 of the first connection hole 112a facing the fuel tank T may be formed at the center portion of the first frame 110a so as to correspond to an outer circumferential surface of the fuel tank T. That is, when the fuel tank T is formed in a cylindrical shape, the inner circumferential surface 113 of the first frame 110a may be formed in a curved surface bent in a circular arc shape in a circumferential direction of the fuel tank T.

Strap rubber 130 which prevents the fuel tank T from being in contact with the first frame 110a and damaged, prevents noise and vibration from being generated, and prevents the fuel tank T from slipping, may be interposed between the inner circumferential surface 113 of the first frame 110a and the fuel tank T. The strap rubber 130 may be formed of an elastically transformable material so that the strap rubber 130 is pressed and transformed between the fuel tank T and the first frame 110a and thus the fuel tank T may change a posture thereof with respect to the first frame 110a. Further, the strap rubber 130 may be provided with slip preventing recesses 132 on an inner circumferential surface of the strap rubber 130 so as to more effectively prevent the fuel tank T from slipping. The slip preventing recesses 132 may be extended in the circumferential direction of the fuel tank T, be provided in plural, and be arranged in the X-axis direction. Here, the extension direction and the arrangement direction of the slip preventing recess 132 may be appropriately adjusted.

Further, hinge coupling recesses 114a and 114b for rotably hinge-coupling the strap 140 to the first frame 110a based on the X-axis may be formed at the center portion of the first frame 110a. One pair of hinge coupling recesses 114a and 114b is formed for one fuel tank T, and the hinge coupling recesses 114a and 114b of one pair may be formed at opposite sides based on the fuel tank T.

Here, two fuel tanks T may be provided, and the two fuel tanks T may be arranged in the Y-axis direction, and the first frame 110a may cross both the two fuel tanks T and support the two fuel tanks T. Accordingly, the number of inner circumferential surfaces 113 of the first frame 110a formed in the curved surfaces, the number of strap rubber 130 provided on the inner circumferential surface 113 of the first frame 110a, the number of pairs of hinge recesses 114a and 114b formed at both sides of the inner circumferential surfaces 113 of the first frame 110a may be two. Further, a portion P1 of the first frame 110a positioned between the two fuel tanks T may be formed to be thicker than a portion P2, on which the fuel tank T is seated, so as to prevent the first frame 110a from being dropped due to an increase in weight according to an increase in the number of fuel tanks T. As a matter of course, the first frame 110a may be formed to be generally thick in order to prevent the first frame 110a from being dropped, but in this case, weight and material cost are increased, so that like the present exemplary embodiment, the first frame 110a may be formed to be generally thin, and the portion P1 of the first frame 110a positioned between the two fuel tanks T may be formed to be thicker than the both-side portions P2 of the portion P1. Further, a hollow hole 115 may be formed at the thick portion P1 (the portion positioned between the two fuel tanks T) in order to further decrease weight and material cost.

Further, a third connection hole 112c, through which a third connecting rod 120c to be described below passes, may be formed at the center portion of the first frame 110a. The third connection hole 112c may be formed by the same principle as that of the first connection hole 112a so that the first frame 110a is relatively movable with respect to the third connecting rod 120c. In the case of the present exemplary embodiment, the two fuel tanks T are provided, and the portion P1 of the first frame 110a between the two fuel tanks T is formed to be thicker than the both-side portions P2 of the portion P1, so that it is easy to form the third connection hole 112c in the portion P1 of the first frame 110a between the two fuel tanks T.

Further, a protecting part fastening recess 116, to which a protecting part-frame fastening bolt (not illustrated) passing through the protecting part 200 is fastened, may be formed at the center portion of the first frame 110a. The protecting part fastening recess 116 may be formed on the outer circumferential surface 117 of the first frame positioned at the opposite side of the fuel tank T based on the inner circumferential surface 113 of the first frame 110a, and the plurality of protecting part fastening recesses 116 may be formed so that the protecting part 200 may be stably fastened.

The second frame 110b may be identically formed to the first frame 110a, and may support the fuel tank T while being spaced apart from the first frame 110a in the Y-axis direction and may be fastened to the vehicle body C.

The first frame 110a and the second frame 110b may be connected with each other by the connecting rod 120 in order to easily align the first frame 110a and the second frame 110b and improve support strength supporting the fuel tank T.

The connecting rod 120 may be formed in a rod extended in a predetermined direction.

Further, when a gap between a frame fastening recess (hereinafter, a first frame fastening recess C1), to which the first frame 110a is fastened, in the vehicle body C and a frame fastening recess (hereinafter, a second frame fastening recess C2), to which the second frame 110b is fastened, is larger than a predetermined gap, the connecting rod 120 may be formed to be longer than the predetermined gap in order to increase a gap between the first frame 110a and the second frame 110b so as to correspond to the gap.

Further, the plurality of connecting rods 120 may be provided in order to more easily align the first frame 110a and the second frame 110b and further improve support strength. That is, the connecting rods 120 may include the first connecting rod 120a inserted into the first connection hole 112a of the first frame 110a and the first connection hole 112a of the second frame 110b, the second connecting rod 120b inserted into the second connection hole 112b of the first frame 110a and the second connection hole 112b of the second frame 110b, and the third connecting rod 120c inserted into the third connection hole 112c of the first frame 110a and the third connection hole 112c of the second frame 110b. In this case, the first connecting rod 120a, the second connecting rod 120b, and the third connecting rod 120c may be arranged in parallel to each other.

Separation preventing parts 122a and 122b, which prevent the connecting rod 120 from being separated from the first frame 110a and the second frame 110b, may be provided at the connecting rod 120. The separation preventing parts 122a and 122b may protrude from an outer peripheral surface of the connecting rod 120. Further, the separation preventing parts 122a and 122b may be provided at the end of the connecting rod 120 or between the first frame 110a and the second frame 110b. That is, in the case of the first connecting rod 120a and the second connecting rod 120b, the separation preventing part 122a may be provided at both ends of the connecting rod 120. By contrast, in the case of the third connecting rod 120c, the separation preventing part 122b may be provided at the both ends of the connecting rod 120 and between the first frame 110a and the second frame 110b. Here, the separation preventing part 122a provided between the first connecting rod 120a and the second connecting rod 120b performs an inherent function (a separation preventing function), but the separation preventing part 122b provided at the third connecting rod 120c may also perform a function of fixing a fuel line L extended from the fuel tank T as well as the inherent function (the separation preventing function). Accordingly, a fuel line accommodating recess 124, in which the fuel line L is accommodated, is formed at the separation preventing part 122b provided at the third connecting rod 120c, and the fuel line accommodating recess 124 may be provided at the both ends of the third connecting rod 120c and between the first frame 110a and the second frame 110b in order to stably fix the fuel line L. In the meantime, the separation preventing parts 122a and 122b may be detachably provided at the connecting rods 120 so that the connecting rods 120 may pass through the first frame 110a and the second frame 110b.

The strap 140 may include a first strap band 142a, of which one end is coupled with any one of the hinge coupling recesses 114a and 114b of one pair of the frame 110, so as to be in contact with and be spaced apart from the fuel tank T, a second strap band 142b, of which one end is coupled with the other of the hinge coupling recesses 114a and 114b of the pair of the frame 110, so as to be in contact with and be spaced apart from the fuel tank T, and a strap bolt 144 screw-engaged with the other end of the first strap band 142 and the other end of the second strap band 142b.

Each of the first strap band 142a and the second strap band 142b may be formed in a shape corresponding to the fuel tank T. That is, when the fuel tank T is formed in a cylindrical shape, each of the first strap band 142a and the second strap band 142b may be formed in a circular arc shape.

Here, in the strap 140, a gap between the other end of the first strap band 142a and the other end of the second strap band 142b may be adjusted by the strap bolt 144, so that the first strap band 142a and the second strap band 142b may pressurize the fuel tank T to the first frame 110a. That is, the first frame 110a, the first strap band 142a, and the second strap band 142b tighten the fuel tank T by a rotation of the strap bolt 144 in a state of surrounding the outer circumferential portion of the fuel tank T, so that the fuel tank T may be stably fixed to the first frame 110a. Further, even though an outer diameter of the fuel tank T is changed, a spaced distance between the other end of the first strap band 142a and the other end of the second strap band 142b is adjusted by the strap bolt 144, so that the fuel tank T may be stably fixed to the first frame 110a.

Further, the strap rubber 130 may be interposed between the first strap band 142a and the fuel tank T and between the second strap band 142b and the fuel tank T, similar to between the frame 110 and the fuel tank T. The strap rubber 130 interposed between the strap 140 and the fuel tank T may be formed by the same principle as that of the strap rubber 130 interposed between the frame 110 and the fuel tank T.

In the meantime, the straps 140 may be provided in the number corresponding to the number of fuel tanks T. That is, when the two fuel tanks T are provided, the two straps 140 may be provided at the first frame 110a, and the two straps 140 may be provided at the second frame 110b.

The protecting part 200 may be approximately formed in a shield shape, and may be formed to have a size covering the fuel tank T when being fastened to the frame 110.

Further, a through-hole 210, through which the protecting part-frame fastening bolt (not illustrated) passes, may be formed at the protecting part 200. The through-hole 210 may be formed in such a manner that a position of the protecting part 200 may be adjusted with respect to the frame 110. That is, in order for a position of the protecting part-frame fastening bolt (not illustrated) passing through the through-hole 210 to be adjusted within a range of the through-hole 210 and be fastened to the protecting part fastening recess 116 even though a position of the protecting part fastening recess 116 is changed by tilting of the first frame 110a and the second frame 110b, an inner diameter of the through-hole 210 may be formed to be larger than the outer diameter of the screw of the protecting part-frame fastening bolt (not illustrated) and be smaller than a diagonal distance of the screw head of the protecting part-frame fastening bolt (not illustrated). Further, the plurality of through-holes 210 may be formed so as to be supported to the frame 110 at a plurality of points and be stably fastened to the frame 110.

Further, an opening 220, which checks the fuel tank T and checks fuel leakage and the like in a state where the protecting part 200 covers the fuel tank T even without being separated from the frame 110, may be formed at the protecting part 200. The opening 220 may be formed to communicate the space at the opposite side of the fuel tank T based on the protecting part 200 and the space at the side of the fuel tank T when the protecting part 200 covers the fuel tank T. In this case, the opening 220 may be formed in a minimum size within a range, in which the fuel tank T may be checked, in order to minimize an area of the fuel tank T to be exposed to the outside through the opening 220. Further, although not separately illustrated, a separate cover (not illustrated) covering the opening 220 may also be provided. In the meantime, the opening 220 may be formed in a portion facing the portion of a nozzle N of the fuel tank T in order to frequently check the portion of the nozzle N of the fuel tank T of which safety is important. In a case of the present exemplary embodiment, the two fuel tanks T may be provided, and two openings 220 formed to face the portions of the nozzles Z may be formed so as to correspond to the two fuel tanks T. Further, in the two fuel tanks T, in order to prevent the portions of the nozzles N from being concentrated to one side, one fuel tank T is provided to head an opposite direction of the other fuel tank T (the nozzle N of one fuel tank T heads in a + X-axis direction, and the nozzle N of the other fuel tank T heads in a - X-axis direction), and thus the two openings 220 may be provided at the opposite sides based on the fuel tank T.

Hereinafter, an operation effect of the apparatus for supporting the fuel tank T of the present exemplary embodiment will be described.

First, the frame 110 may move in the X-axis direction with respect to the connecting rod 120 so as to correspond to the shape of the vehicle body C (more accurately, the positions of the frame fastening recesses C1 and C2), so that a gap between the first frame 110a and the second frame 110b may be adjusted, the first frame 110a and the second frame 110b may be tilted based on the X-axis and the Y-axis, and an angle of the first frame 110a and an angle of the second frame 110b may be adjusted, and then the frame 110 may be fastened to the vehicle body C.

Further, in a state where the frame 110 is fastened to the vehicle body C, the fuel tank T may be inserted between the vehicle body C and the frame 110 and may be seated on the frame 110.

Further, the first strap 140 and the second strap 140 are retracted and the strap bolt 144 is rotated in a state where the fuel tank T is seated on the frame 110, so that the fuel tank T may be fixed to the frame 110. That is, the fuel tank T may be surrounded and tightened by the frame 110 and the strap 140 and may be fixed to the frame 110.

Further, in a state where the fuel tank T is fixed to the frame 110, the protecting part 200 may be fastened to the frame 110 to cover the fuel tank T.

In the meantime, in the apparatus for supporting the fuel tank T of the present exemplary embodiment, the first frame 110a and the second frame 110b may be connected to be relatively movable with respect to the connecting rod 120, so that a gap between the first frame 110a and the second frame 110b may be adjusted, and the angles between the first frame 110a and the second frame 110b and the connecting rod 120 may be adjusted, so that the frame 110 may be fastened to the vehicle body C even though the positions of the frame fastening recesses C1 and C2 of the vehicle body C are changed. Accordingly, it is possible to solve a problem in that it is necessary to provide a new apparatus for supporting the fuel tank T corresponding to the changed frame fastening recesses C1 and C2.

More particularly, as illustrated in FIG. 8, when the spaced distance between the first frame fastening recess C1 and the second frame fastening recess C2 in the X-axis direction is larger than the spaced distance between the first frame fastening recess C1 and the second frame fastening recess C2 in the X-axis direction illustrated in FIG. 6, a gap between the first frame 110a and the second frame 110b may be adjusted in the X-axis direction and may be fastened to the vehicle body C. Here, the gap between the first frame 110a and the second frame 110b in the X-axis direction may also be adjusted in accordance with a length of the fuel tank T. In this case, it is a matter of course that the spaced distance between the first frame fastening recess C1 and the second frame fastening recess C2 may be formed so as to correspond to the length of the fuel tank T. Accordingly, even though the length of the fuel tank T is changed, it is possible to stably support the fuel tank T by appropriately adjusting the gap between the first frame 110a and the second frame 110b.

Further, in a case of the vehicle body C illustrated in FIG. 6, a height of the first frame fastening recess C1 in the Z-axis direction is not different from a height of the second frame fastening recess C2 in the Z-axis direction, but as illustrated in FIG. 9, when a height of the first frame fastening recess C1 in the Z-axis direction is different from a height of the second frame fastening recess C2 in the Z-axis direction, the first frame 110a and the second frame 110b may be tilted with respect to the connecting rod 120 based on the X-axis and be fastened to the vehicle body C. In this case, the strap rubber 130 and the noise and vibration preventing member (not illustrated) are elastically transformed between the fuel tank T and the frame 110 and between the connecting rod 120 and the frame 110, so that the first frame 110a and the second frame 110b may be tilted with respect to the connecting rod 120.

Further, in a case of the vehicle body C illustrated in FIG. 7, a height of the first frame fastening recess C1 in the Y-axis direction is not different from a height of the second frame fastening recess C2 in the Y-axis direction, but as illustrated in FIG. 10, when a height of the first frame fastening recess C1 in the Y-axis direction is different from a height of the second frame fastening recess C2 in the Y-axis direction, the first frame 110a and the second frame 110b may be tilted with respect to the connecting rod 120 based on the Z-axis and be fastened to the vehicle body C. In this case, the strap rubber 130 and the noise and vibration preventing member (not illustrated) are elastically transformed between the fuel tank T and the frame 110 and between the connecting rod 120 and the frame 110, so that the first frame 110a and the second frame 110b may be tilted with respect to the connecting rod 120.

Further, in the apparatus for supporting the fuel tank T of the present exemplary embodiment, the position of the frame 110 may be precisely adjusted with respect to the vehicle body C by forming an inner diameter of the mount hole to be larger than the outer diameter of the screw of the frame-vehicle body fastening bolt B1, so that the frame 110 may be easily fastened to the vehicle body C.

In the meantime, the apparatus for supporting the fuel tank T of the present exemplary embodiment may include the protecting part 200 covering the fuel tank T and protect the fuel tank T from the outside. Accordingly, it is possible to prevent the fuel tank T from colliding with an external object and being damaged, prevent the fuel tank T from being in contact with a corrosive material and being corroded, and prevent fuel from leaking from the fuel tank T and prevent a problem in an operation of the vehicle and fire generation.

Further, the protecting part 200 is detachably provided at the fixing part 100 (more accurately, the frame 110), so that only the protecting part 200 is detached from the fixing part 100 in a state where the fuel tank T is supported to the vehicle body C by the fixing part 100, thereby easily checking and repairing the fuel tank T. Further, the opening 220 is provide at the protecting part 200, so that it is possible to check the fuel tank T even in a state where the protecting part 200 is not detached by providing the opening 220 at the protecting part 200, thereby more easily checking the fuel tank T.

Further, in the apparatus for supporting the fuel tank T of the present exemplary embodiment, the position of the frame 110 may be precisely adjusted with respect to the protecting part 200 by forming an inner diameter of the through-hole 210 to be larger than an outer diameter of the screw of the protecting part-frame fastening bolt (not illustrated), so that the protecting part 200 may be easily fastened to the frame 110.

In the meantime, in a case of the present exemplary embodiment, the frame 110 is movable with respect to the connecting rod 120 in the X-axis direction, and is tiltably provided with respect to the connecting rod 120 in the Y-axis and Z-axis directions, but the frame 110 may be provided to be movable with respect to the connecting rod 120 only in the X-axis direction. That is, the connection hole 112, into which the connecting rod 120 is inserted, passes through in the X-axis direction, and is formed to have a predetermined gap with the connecting rod 120, but the gap may be about zero (0). For example, when each of the connecting rod 120 and the connection hole 112 is formed in a cylindrical shape having a circular cross-section, the inner diameter of the connection hole 112 may be formed in the same size as that of the outer diameter of the connecting rod 120. In this case, the connecting rod 120 is in close contact with the connection hole 112, thereby being advantageous in noise and vibration aspects. Further, in this case, only any one of the first frame 110a and the second frame 110b may be provided to be movable with respect to the connecting rod 120.

Further, in the present exemplary embodiment, the two frames 110 are provided, but in order to decrease manufacturing cost, one frame may be provided and the one frame 110 may be formed to be thick in the X-axis direction enough to stably support the fuel tank T. Otherwise, in order to more stably support the fuel tank T, three or more frames 110 may be provided.

Further, in the present exemplary embodiment, the two fuel tanks T are provided, but one or three or more fuel tanks T may be provided. In this case, the frames 110, the straps 140, and the connecting rods 120 may be provided in the number corresponding to the number of fuel tanks T.

Further, in the present exemplary embodiment, the fuel tank T may be formed in a cylindrical shape, but may also be formed in another shape, such as a rectangular shape. In this case, the inner circumferential surface of the frame 110 and the strap 140 may be formed to correspond to the shape of the fuel tank.

Further, in the present exemplary embodiment, the connecting rod 120 and the connecting holes 112, into which the connecting rod 120 is inserted, are formed in cylindrical shapes, but the connecting rod 120 may be formed in a rod having a non-circular cross-section, and the connecting holes 112 may be formed in a shape corresponding to the connecting rod 120.

Further, in the present exemplary embodiment, the mount hole 111 of the frame 110 is elongated in the Y-axis direction so that the frame 110 is adjustable with respect to the vehicle body C in the Y-axis direction, but the mount hole 111 of the frame 110 may be elongated in the X-axis direction so that the frame 110 is adjustable with respect to the vehicle body C in the X-axis direction, and the mount hole 111 may be formed to have a circular shape having a larger inner diameter than the outer diameter of the screw of the frame-vehicle body fastening bolt B1 so that the frame 110 is adjustable with respect to the vehicle body C in the X-axis and Y-axis directions.

Further, in a case of the present exemplary embodiment, the through-hole 210 of the protecting part 200 is formed in a circular shape, but may be formed in a hole elongated in a predetermined direction.

Further, in a case of the present exemplary embodiment, in the apparatus for supporting the fuel tank T, the frame 110 is fastened to the vehicle body C, the fuel tank T is seated on the frame 110, the strap 140 fixes the fuel tank T to the frame 110, and the protecting part 200 is fastened to the frame 110, but the fastening method may be appropriately adjusted. For example, after the fuel tank T is pre-fastened to the frame 110 and the strap 140, the frame 110 may be fastened to the vehicle body C by appropriately adjusting the position and the angle of the frame 110 to correspond to the vehicle body C. Next, the fuel tank T may be properly fastened to the frame 110 by tightening the strap 140 and the protecting part 200 may be fastened to the frame 110.

## Claims

1. An apparatus for supporting a fuel tank, comprising:
a first frame which is supported to a vehicle body and supports a fuel tank;
a second frame which is spaced from the first frame, is supported to the vehicle body, and supports the fuel tank; and
a connecting rod configured to connect the first frame and the second frame,
wherein at least one of the first frame and the second frame is connected to the connecting rod to be relatively movable with respect to the connecting rod.

2. The apparatus of claim 1, wherein a first connection hole, through which the connecting rod passes, is formed in the first frame,
a second connection hole, through which the connecting rod passes, is formed in the second frame, and
a gap is formed between the first connection hole and the connecting rod and between the second connection hole and the connecting rod.

3. The apparatus of claim 2, wherein each of the connecting rod, the first connection hole, and the second connection hole is formed in a cylindrical shape having a circular cross-section, and
an inner diameter of the first connection hole and an inner diameter of the second connection hole are formed to be the same as an outer diameter of the connecting rod.

4. The apparatus of claim 2, wherein each of the connecting rod, the first connection hole, and the second connection hole is formed in a cylindrical shape having a circular cross-section, and
an inner diameter of the first connection hole and an inner diameter of the second connection hole are formed to be larger than an outer diameter of the connecting rod.

5. The apparatus of claim 1, wherein the first frame is supported to the vehicle body by a first bolt which passes through a mount hole of the first frame and is fastened to the vehicle body,
the second frame is supported to the vehicle body by a second bolt which passes through a mount hole of the second frame and is fastened to the vehicle body,
an inner diameter of the mount hole of the first frame is formed to be larger than an outer diameter of a screw of the first bolt and smaller than a diagonal distance of a screw head of the first bolt, and
an inner diameter of the mount hole of the second frame is formed to be larger than an outer diameter of a screw of the second bolt and smaller than a diagonal distance of a screw head of the second bolt.

6. The apparatus of claim 1, wherein the connecting rod is formed to be longer than a gap between a portion of the first frame supported to the vehicle body and a portion of the second frame supported to the vehicle body.

7. The apparatus of claim 1, wherein the connecting rod is provided with a separation preventing part protruding from an outer circumferential surface of the connecting rod.

8. The apparatus of claim 1, wherein the number of connecting rods provided is two or more.

9. The apparatus of claim 8, wherein the fuel tank is provided between the plurality of connecting rods.

10. The apparatus of claim 1, wherein the first frame crosses the fuel tank in a width direction vertical to a longitudinal direction of the fuel tank and supports the fuel tank, and
the second frame is spaced apart from the first frame in the longitudinal direction of the fuel tank and crosses the fuel tank in a width direction of the fuel tank, and supports the fuel tank.

11. The apparatus of claim 10, wherein the fuel tank is formed in a cylindrical shape, and
the first frame and the second frame cross the fuel tank in a radius direction of the fuel tank.

12. The apparatus of claim 10, wherein the number of fuel tanks provided is two or more,
the plurality of fuel tanks is arranged in the width direction of the fuel tank, and
each of the first frame and the second frame crosses all of the plurality of fuel tanks.

13. The apparatus of claim 1, wherein the first frame is provided with a strap fixing the fuel tank to the first frame, and
the second frame is provided with a strap fixing the fuel tank to the second frame.

14. The apparatus of claim 13, further comprising:
strap rubber provided between the first frame and the fuel tank, the second frame and the fuel tank, and the strap and the fuel tank.
